# EUROPÄISCHE PATENTSCHRIFT

(11) **EP 1 648 098 B1**
(45) Veröffentlichungstag und Bekanntmachung des Hinweises auf die Patenterteilung: **10.03.2010**
(21) Anmeldenummer: 05022130.8
(22) Anmeldetag: 11.10.2005
(51) Int. Cl.: H04B 7/185

(54) **Schnittstellen-Vorrichtung, Kommunikations-Netzwerk, Flugzeug, Verfahren zum Betreiben einer Schnittstelle für eine Kommunikations-Netzwerk und Verwendung einer Schnittstellen-Vorrichtung oder eines Kommunikations-Netzwerks in einem Flugzeug**
Interface device, communication network, aircraft, method for operating an interface device for a communication network and use of an interface device or communication network in an aircraft
Dispositif d'interface, réseau de communication, aéronef, procédé pour mettre en oeuvre une interface pour un réseau de communication et utilisation du dispositif d'interface ou d'un réseau de communication à bord d'un aéronef

(30) Priorität: 13.10.2004 DE 102004049895; 13.10.2004 US 618129 P
(43) Veröffentlichungstag der Anmeldung: 19.04.2006
(73) Patentinhaber: Airbus Deutschland GmbH, 21129 Hamburg (DE)
(72) Erfinder: Reitmann, Jörg, 21698 Harsefeld (DE); Müller, Jan, 21077 Hamburg (DE); Kebel, Robert, 21684 Stade Hagen (DE); König, Axel, 22547 Hamburg (DE)
(74) Vertreter: Maiwald Patentanwalts GmbH

(56) Entgegenhaltungen:
- WO-A-02/101995
- WO-A-02/103932
- US-A1- 2004 142 658
- YANN-HANG LEE ET AL: "An integrated scheduling mechanism for fault-tolerant modular avionics systems" AEROSPACE CONFERENCE, 1998 IEEE SNOWMASS AT ASPEN, CO, USA 21-28 MARCH 1998, NEW YORK, NY, USA,IEEE, US, Bd. 4, 21. März 1998 (1998-03-21), Seiten 21-29, XP010286915 ISBN: 0-7803-4311-5

## Beschreibung

Die Erfindung betrifft eine Schnittstellen-Vorrichtung, ein Kommunikations-Netzwerk, ein Flugzeug, ein Verfahren zum Betreiben einer Schnittstelle für ein Kommunikations-Netzwerk und eine Verwendung einer Schnittstellen-Vorrichtung oder eines Kommunikations-Netzwerks in einem Flugzeug.

In modernen Passagierflugzeugen gehört es zum von Passagieren erwarteten Standard, dass eine Vielzahl von elektronischen Geräten und Anwendungen implementiert sind, um den Komfort für einen Passagier zu erhöhen. Ferner führen die immer wichtiger werdenden Sicherheitsaspekte in einem Flugzeug dazu, dass auch elektronische Überwachungssysteme auf Basis elektronischer Geräte in einem Flugzeug implementiert werden.

Hierfür werden gemäß dem Stand der Technik die unterschiedlichen Geräte in dem Flugzeug verteilt vorgesehen und über separate Steuer-Einrichtungen per Funk angesteuert. Zur drahtlosen Datenübertragung eines solchen Systems in einem Flugzeug wird gemäß dem Stand der Technik somit häufig das Prinzip der konventionellen Verteilung benutzt. Hierbei verfügt jedes Funksystem über separate Sender-Geräte und Empfänger-Geräte mit jeweils eigenen Antennen, die über das Flugzeuginnere verteilt sind.

Anders ausgedrückt besteht jedes solcher elektronischen Systeme in einem Flugzeug aus einer Steuereinrichtung und aus einem Empfängergerät, die unter Verwendung einer in jeder Steuereinrichtung jeweils separat ausgeführten Antenne kommunizieren, mit welcher lediglich eine Kommunikation zwischen dieser einen Steuereinrichtung und den dieser einen Steuereinrichtung zugeordneten Empfängergeräten möglich ist.

Das Dokument US 2004/142658 offenbart eine Schnittstellen-Vorrichtung für ein Kommunikations-Netzwerk aus einer Mehrzahl von ersten Kommunikations-Knoten und aus einer Mehrzahl von zweiten Kommunikations-Knoten.

Die aus dem Stand der Technik bekannte Kommunikations-Architektur hat den Nachteil, dass eine hohe Anzahl von Antennen zu installieren ist, was einen hohen Aufwand zur Folge hat. Ferner müssen alle drahtlosen Systeme EMV-Vorschriften ("elektromagnetische Verträglichkeit") erfüllen, das heißt Schutzanforderungen gerecht werden, die an Geräte gestellt werden, welche elektromagnetische Störungen verursachen können. Ferner besteht eine starke Abhängigkeit der Installationsorte der einzelnen Antennen von der Kabinenausstattung (zum Beispiel Küche, Toilette usw.). Soll ein System geändert, erweitert oder ersetzt werden oder soll ein solches System gewartet werden, so ist jeweils die gesamte Kabine betroffen, was einen hohen Wartungsaufwand zur Folge hat. Gerade bei Passagierflugzeugen, die häufig in einem Winterlayout und in einem Sommerlayout gestaltet werden, das heißt mindestens zweimal im Jahr umgerüstet werden, führt dies zu erheblichen Kosten. Ferner erfordert die Implementierung neuer Funksysteme mit der Kommunikations-Architektur gemäß dem Stand der Technik einen erheblichen Aufwand für Verkabelung, Platz und Gewicht.

Der Erfindung liegt das Problem zugrunde, eine Netzwerkarchitektur für die (vorzugsweise drahtlose) Vernetzung von Steuergeräten und Empfangsgeräten in einem Flugzeug bereitzustellen, so dass der Aufwand zum Implementieren und Aktualisieren von Systemkomponenten verringert ist.

Dieses Problem wird durch eine Schnittstellen-Vorrichtung, durch ein Kommunikations-Netzwerk, durch ein Flugzeug, durch ein Verfahren zum Betreiben einer Schnittstelle für ein Kommunikations-Netzwerk und durch eine Verwendung einer Schnittstellen-Vorrichtung oder eines Kommunikations-Netzwerks in einem Flugzeug mit den Merkmalen gemäß den unabhängigen Patentansprüchen gelöst.

Die Schnittstellen-Vorrichtung der Erfindung für ein Kommunikations-Netzwerk aus einer Mehrzahl von ersten Kommunikations-Knoten und einer Mehrzahl von zweiten Kommunikations-Knoten weist eine Vermittlungs-Einheit und eine Sende-/Empfangs-Antenne auf. Die Vermittlungs-Einheit ist mit jedem der ersten Kommunikations-Knoten und mit jedem der zweiten Kommunikations-Knoten kommunizierfähig koppelbar und ist zum Übermitteln einer Kommunikationsnachricht zwischen einem der ersten Kommunikations-Knoten und einem diesem eindeutig zugeordneten zweiten Kommunikations-Knoten eingerichtet. Ferner ist die Vermittlungs-Einheit mit der Sende-/Empfangs-Antenne zum drahtlosen Kommunizieren mit jedem der zweiten Kommunikations-Knoten über die zum Kommunizieren mit jedem der zweiten Kommunikations-Knoten gemeinsam vorgesehene Sende-/Empfangs-Antenne gekoppelt.

Ein Kommunikations-Netzwerk der Erfindung enthält eine Schnittstellen-Vorrichtung mit den oben beschriebenen Merkmalen, eine Mehrzahl von ersten Kommunikations-Knoten und eine Mehrzahl von zweiten Kommunikations-Knoten. Jedem der ersten Kommunikations-Knoten ist einer der zweiten Kommunikations-Knoten eindeutig zugeordnet. Die Vermittlungs-Einheit ist mit jedem der ersten Kommunikations-Knoten und mit jedem der zweiten Kommunikations-Knoten kommunizierfähig gekoppelt und zum Übermitteln einer Kommunikationsnachricht zwischen einem der ersten Kommunikations-Knoten und dem diesem eindeutig zugeordneten zweiten Kommunikations-Knoten über die zum Kommunizieren mit jedem der zweiten Kommunikations-Knoten gemeinsam vorgesehene Sende-/Empfangs-Antenne eingerichtet.

Das erfindungsgemäße Flugzeug enthält eine Schnittstellen-Vorrichtung mit den oben beschriebenen Merkmalen oder ein Kommunikations-Netzwerk mit den oben beschriebenen Merkmalen.

Bei einem erfindungsgemäßen Verfahren zum Betreiben einer Schnittstelle für ein Kommunikations-Netzwerk aus einer Mehrzahl von ersten Kommunikations-Knoten und einer Mehrzahl von zweiten Kommunikations-Knoten wird eine Vermittlungs-Einheit der Schnittstelle mit jedem der ersten Kommunikations-Knoten und mit jedem der zweiten Kommunikations-Knoten kommunizierfähig gekoppelt und wird zum Übermitteln der Kommunikationsnachricht zwischen einem der ersten Kommunikations-Knoten und einem diesem eindeutig zugeordneten zweiten Kommunikations-Knoten eingerichtet. Die Vermittlungs-Einheit wird mit der Sende-/Empfangs-Antenne zum drahtlosen Kommunizieren mit jedem der zweiten Kommunikations-Knoten über die zum Kommunizieren mit jedem der zweiten Kommunikations-Knoten gemeinsam vorgesehene Sende-/Empfangs-Antenne gekoppelt.

Ferner wird erfindungsgemäß eine Schnittstellen-Vorrichtung mit den oben beschriebenen Merkmalen oder ein Kommunikations-Netzwerk mit den oben beschriebenen Merkmalen in einem Flugzeug verwendet.

Ein wichtiger Aspekt der Erfindung ist darin zu sehen, eine Schnittstelle zwischen ersten Kommunikations-Knoten (zum Beispiel Steuereinrichtungen für Empfangsgeräte) und zweiten Kommunikations-Knoten (zum Beispiel Empfangsgeräte, die von den Steuereinrichtungen steuerbar sind) bereitzustellen, wobei eine für alle Paare aus einem ersten Kommunikations-Knoten und einem zugehörigen zweiten Kommunikations-Knoten gemeinsame Sende-/Empfangs-Antenne verwendet wird. Eine solche zentrale Sende-/Empfangs-Antenne ermöglicht einen Datenaustausch zwischen einem beliebigen der ersten Kommunikations-Knoten und einem bestimmten ersten Kommunikations-Knoten eindeutig zugeordneten zweiten Kommunikations-Knoten mit einem hohen Grad an Flexibilität. Das separate Ausführen von isolierten Antennen, welche für jedes Paar aus einem ersten Kommunikations-Knoten und einem zweiten Kommunikations-Knoten gemäß dem Stand der Technik erforderlich ist, ist somit erfindungsgemäß entbehrlich. Mit der Vermittlungs-Einheit, welche die Kopplung von einem ersten Kommunikations-Knoten mit einem jeweiligen zweiten Kommunikations-Knoten unter Verwendung der gemeinsamen Antenne zum Abstrahlen und Empfangen von elektromagnetischen Signalen bewerkstelligt, ist ein zentraler Mischer-Knoten in dem Netzwerk geschaffen, der die Kommunikationsnachrichten (zum Beispiel Steuersignale oder Datensignale) zwischen einem ersten Kommunikations-Knoten und einem zweiten Kommunikations-Knoten steuert, Bandbreiteressourcen verteilt und mit einer einzigen Sende-/Empfangs-Antenne auskommt. Die Mehrzahl von ersten Kommunikations-Knoten können zum Beispiel zentral an einer bestimmten Stelle in einem Flugzeug vorgesehen werden und drahtgebunden mit der Vermittlungs-Einheit gekoppelt werden. Anschaulich können die ersten Kommunikations-Knoten und die Schnittstellen-Vorrichtung als ein lokales (Teil-)Netzwerk ausgeführt sein, das an einer bestimmten Stelle zentral verwaltet, gewartet und bedient werden kann.

Beispielsweise können die verschiedenen ersten Kommunikations-Knoten Elektronik-Einschiebvorrichtungen zum Einschieben in ein Elektronik-Rack sein, so dass die einzelnen ersten Kommunikations-Knoten beliebig erweitert oder verändert werden können, ohne dass dies Auswirkungen auf die gesamte Kabine eines Flugzeugs hat. Durch einen zentralen Verbinder (nämlich die Schnittstellen-Vorrichtung mit Vermittlungs-Einheit und gemeinsamer Sende-/Empfangs-Antenne) ist ein zentrales Steuersystem geschaffen, mit den verteilt über das Flugzeug vorgesehene zweiten Kommunikations-Knoten drahtlos über die gemeinsame Antenne kommunizieren können. Die ersten Kommunikations-Knoten sind vorzugsweise ortsnah bei dem zentralen Verbinder lokalisiert.

Zum Implementieren eines neuen Geräts bzw. einer neuen Funktionalität in einem Flugzeug, zum Beispiel einer Mobilfunktelefonie-Einrichtung, wird ein entsprechendes Steuergerät als erster Kommunikations-Knoten mit der Vermittlungs-Einheit gekoppelt, und es wird an einer beliebigen Stelle in dem Flugzeug das zugehörige Empfängergerät implementiert (zum Beispiel an den Passagiersitzen). Mittels der fest installierten und in der Vermittlungs-Einheit zum Kommunizieren mit allen zweiten Kommunikations-Knoten gemeinsam vorgesehenen Sende-/Empfangs-Antenne kann dann eine Kommunikation zwischen dem Steuergerät und dem Empfängergerät erfolgen, vermittelt durch die Schnittstellen-Vorrichtung.

Somit ist erfindungsgemäß ein universelles zentrales Verteilungssystem mehrfacher drahtloser Services, insbesondere für ein Flugzeug, geschaffen ("Universal Wireless Backbone System"). Für die Implementierung verschiedener funkbasierter Systeme in eine Flugzeugkabine ist es dadurch möglich, Funkdienste in dem Flugzeug universell, skalierbar und zukunftssicher zu realisieren. Daraus resultieren eine einfache Wartung, eine große Variabilität, eine gute Skalierbarkeit und eine Unabhängigkeit von bestimmten Funkprotokollen, so dass vielfältige gegenwärtige aber auch zukünftige Funkdienste über einen zentralen Speisepunkt den Flugzeuginnenbereich beschicken können, wobei simultan verfügbare, begrenzte Kanalressourcen optimal genutzt werden können.

Elektronische Einrichtungen, die als erste und zweite Kommunikations-Knoten erfindungsgemäß in das Netzwerk integriert werden können, sind zum Beispiel ein WLAN (Wireless Local Area Network), eine Mobilfunk-Einrichtung zum Ermöglichen von Mobilfunkgesprächen in dem Flugzeug (zum Beispiel auf Basis der GMS-Technologie oder der UMTS-Technologie), ein On-Board-Netzwerk, ein Kabinenüberwachungssystem oder ein Passagierunterhaltssystem (IFE, "In Flight Cabin Entertainment").

Die Erfindung schafft somit eine gemeinsame Antennenstruktur für mehrere elektronische Geräte, die über diese zentrale Antennenstruktur miteinander kommunizieren. Die Antenne kann als breitbandige Antenne vorgesehen sein, so dass viele Funksignale über eine einzige Antenne geschickt werden können. Entscheidend für die Erfindung ist aber, dass die Sende-/Empfangs-Antenne gemeinsam für die verschiedenen Systeme vorgesehen ist, so dass sie einmal zentral installiert werden kann und auch bei Erweiterung von Systemen unverändert betrieben werden kann. Somit ist nur noch eine einzige lokale Antennenspeiseelektronik an einer einzigen Stelle des Netzwerks erforderlich, die auswechselbar vorgesehen sein kann, so dass der Wartungsaufwand besonders gering ist. An der Schnittstellen-Vorrichtung können konfigurierbare Anschlusspunkte (zum Beispiel Steckplätze eines Elektronik-Racks) vorgesehen sein, in welche die ersten Kommunikations-Knoten beliebig und variabel eingesteckt und ausgesteckt werden können. Zum Erweitern eines Systems ist es somit nur noch erforderlich, ein Elektronikbauelement in einen freien Steckplatz an der Schnittstellen-Vorrichtung einzustecken und an einer beliebigen anderen Stelle im Flugzeug ein Empfangsgerät zu installieren, wobei die Kommunikation zwischen der Elektronik und dem Empfangsgerät über eine Antenne des Empfangsgeräts und eine zentrale Antenne, nämlich die Antennenstruktur der Erfindung, erfolgt.

Die gemeinsame Sende-/Empfangs-Antenne der Erfindung kann in eine Sende-Antenne und in eine davon separat vorgesehene Empfangs-Antenne aufgeteilt sein, was insbesondere zur Kollisionsvermeidung in einer WLAN-Anwendung ("Wireless Local Area Network") wichtig ist. Im Allgemeinen, das heißt für viele andere Anwendungen, wie zum Beispiel die Mobiltelefonie oder ein Kamera-Überwachungssystem, reicht jedoch auch eine gemeinsame Sende-/Empfangs-Antenne aus, die sowohl eine Sendefunktionalität als auch eine Empfangsfunktionalität aufweist.

Ein Aspekt der Erfindung ist darin zu sehen, dass verteilt in einem Flugzeug die Empfangsgeräte angeordnet sind (zum Beispiel ein Frachtcodierungssystem in einem Frachtraum, ein Passenger Entertainment System in einem Passagierraum, ein Überwachungssystem in einem Cockpit, etc.). An einer zentralen Stelle kann die Schnittstellen-Vorrichtung samt ersten Kommunikations-Knoten implementiert werden und stellt die Master-Steuerung für die einzelnen verteilten Systeme bereit.

Die drahtlose Kommunikation zwischen der gemeinsamen Sende-/Empfangs-Antenne der Schnittstellen-Vorrichtung und verteilten Sende-/Empfangs-Antennen der zweiten Kommunikations-Knoten erfolgt vorzugsweise im Hochfrequenzbereich, zum Beispiel im Rahmen eines GSM 400, GSM 850, GSM 900, GSM 1800, GSM 1900, CDMA,UMTS oder WLAN (gemäß einem IEEE 802.11 Standard) Systems.

Einem ersten Kommunikations-Knoten kann einer oder können mehrere zweite Kommunikations-Knoten zugeordnet sein.

Bevorzugte Weiterbildungen der Erfindung ergeben sich aus den abhängigen Ansprüchen.

Im Weiteren werden Ausgestaltungen der erfindungsgemäßen Schnittstellen-Vorrichtung beschrieben. Diese Ausgestaltungen gelten auch für das Kommunikations-Netzwerk, das Flugzeug, das Verfahren zum Betreiben einer Schnittstelle für ein Kommunikations-Netzwerk, und die Verwendung einer Schnittstellen-Vorrichtung oder eines Kommunikations-Netzwerks in einem Flugzeug.

Die Vermittlungs-Einheit kann für eine drahtgebundene Kommunikation mit jedem der ersten Kommunikations-Knoten eingerichtet sein. Mit anderen Worten können über herkömmliche Verdrahtungen die ersten Kommunikations-Knoten mit der Vermittlungs-Einheit lokal gekoppelt sein, so dass hierfür eine separate Funkverbindung entbehrlich ist.

Die Vermittlungs-Einheit kann eine Mehrzahl von Sendeanschlüssen aufweisen und kann eine Mehrzahl von Empfangsanschlüssen aufweisen. Jeweils einer der Sendeanschlüsse und jeweils einer der Empfangsanschlüsse kann mit einem der ersten Kommunikations-Knoten koppelbar sein. Ferner kann jeder der Sendeanschlüsse zum Übermitteln einer von einem der ersten Kommunikations-Knoten zu sendenden Kommunikationsnachricht eingerichtet sein, und jeder der Empfangsanschlüsse kann zum Übermitteln einer an einen der ersten Kommunikations-Knoten zu sendenden Kommunikationsnachricht eingerichtet sein. Durch das Auftrennen des Sendepfads von dem Empfangspfad ist ein kollisionsfreies Übermitteln auch großer Mengen von Daten zwischen den ersten und zweiten Kommunikations-Knoten begünstigt.

Die Vermittlungs-Einheit kann eine erste Signalverarbeitungs-Einheit aufweisen, die mit der Mehrzahl von Sendeanschlüssen gekoppelt ist und die zum Verarbeiten von mittels der Sende-/Empfangs-Antenne zu sendenden Signalen eingerichtet ist, welche der ersten Signalverarbeitungs-Einheit mittels mindestens einem der Sendeanschlüsse zuführbar sind. Die erste Signalverarbeitungs-Einheit kann anschaulich als eine Art Router ausgestaltet sein, welche die über die Sendeanschlüsse übermittelten Signale ordnet, klassifiziert und vorverarbeitet, um sie der Antenne zum Übermitteln an den zugehörigen zweiten Kommunikations-Knoten bereitzustellen.

Die Vermittlungs-Einheit kann ferner eine zweite Signalverarbeitungs-Einheit aufweisen, die mit der Mehrzahl von Empfangsanschlüssen gekoppelt ist und die zum Verarbeiten von mittels der Sende-/Empfangs-Antenne empfangenen Signalen eingerichtet ist, welche mindestens einem Empfangsanschluss mittels der zweiten Signalverarbeitungs-Einheit zuführbar sind. Die zweite Signalverarbeitungs-Einheit verarbeitet von der Antenne empfangene Signale und kann diese an die entsprechenden ersten Kommunikations-Knoten weiterleiten, wobei die zweite Signalverarbeitungs-Einheit auch eine Vorverarbeitung der Signale durchführen kann.

Die Sende-/Empfangs-Antenne der Schnittstellen-Vorrichtung kann in eine Sende-Antenne zum drahtlosen Senden von Signalen an die zweiten Kommunikations-Knoten und in eine von der Sende-Antenne separat vorgesehene Empfangs-Antenne zum drahtlosen Empfangen von Signalen von den zweiten Kommunikations-Knoten aufgeteilt sein. Das Aufteilen der Sende-/Empfangs-Antenne in eine separate Empfangs-Antenne und in eine separate Sende-Antenne stellt ein kollisionsfreies Übermitteln auch großer Datenmengen sicher und ist zum Einrichten eines WLAN-Systems wichtig. Eine Sende-/Empfangs-Antenne kann somit in eine Transmit-Teilantenne (TX) und in eine Receive-Teilantenne (RX) aufgeteilt sein.

Die Schnittstellen-Vorrichtung kann eine Mehrzahl von Sende-/Empfangs-Antennen aufweisen, von denen jede zum Kommunizieren mit jedem der zweiten Kommunikations-Knoten gemeinsam und zentral vorgesehen ist. Entscheidend ist, dass auch bei Vorsehen von einer Mehrzahl von Sende-/Empfangs-Antennen, diese gemeinsam und zentral für alle ersten und zweiten Kommunikations-Knoten vorgesehen sind, und dass es nicht erforderlich ist, für ein bestimmtes Paar aus einem ersten Kommunikations-Knoten und einem zweiten Kommunikations-Knoten eine speziell hierfür vorgesehene Sende-/Empfangs-Antenne bereitzustellen. Das Vorsehen einer Mehrzahl von gemeinsamen Sende-/Empfangs-Antennen erlaubt es, die Signalverarbeitungskapazität des Systems weiter zu erhöhen, da auf den verschiedenen Antennen unterschiedliche Signale simultan gesendet werden können.

Im Weiteren werden Ausgestaltungen des erfindungsgemäßen Kommunikations-Netzwerks beschrieben. Diese Ausgestaltungen gelten auch für die Schnittstellen-Vorrichtung, für das Flugzeug, für das Verfahren zum Betreiben einer Schnittstelle für ein Kommunikations-Netzwerk und für die Verwendung einer Schnittstellen-Vorrichtung oder eines Kommunikations-Netzwerks in einem Flugzeug.

Das Kommunikations-Netzwerk kann eine Aufnahme-Vorrichtung aufweisen, in welcher die Mehrzahl von ersten Kommunikations-Knoten aufnehmbar sind. Anders ausgedrückt können die ersten Kommunikations-Knoten lokal an einer speziellen Stelle gemeinsam aufgenommen werden, insbesondere in unmittelbarer Nachbarschaft zu der Schnittstellen-Vorrichtung, um eine zentrale Steuerzentrale zu schaffen, in welcher die Steuergeräte zum Steuern der verteilten Empfangsgeräte vorgesehen sind. Die Aufnahme-Vorrichtung kann ein Elektronik-Rack sein. Dementsprechend können die ersten Kommunikations-Knoten Elektronik-Vorrichtungen sein, die einfach in das Elektronik-Rack einsteckbar sind oder daraus entfernbar sind.

Zumindest eine der Mehrzahl von ersten Kommunikations-Knoten kann eine SteuerEinrichtung zum Steuern des zugeordneten zweiten Kommunikations-Knotens aufweisen. Anders ausgedrückt können zentral in einer Umgebung der Schnittstellen-Vorrichtung die Steuer-Einrichtungen angeordnet sein, welche die dezentral angeordneten zweiten Kommunikations-Knoten steuern. Allerdings ist alternativ oder ergänzend auch ein Steuern der ersten Kommunikations-Knoten durch die zweiten Kommunikations-Knoten möglich.

Zumindest einer der ersten Kommunikations-Knoten kann als WLAN-Einrichtung ("Wireless Local Area Network"), als Mobilfunk-Einrichtung (insbesondere GSM-Funk-Einrichtung), als Passagierunterhaltungs-Einrichtung (zum Beispiel digitales Fernsehen), als Personenüberwachungs-Einrichtung (zum Beispiel Kameras zum Überwachen des Passagierraums, etc.), als Frachtüberwachungs-Einrichtung (die es zum Beispiel einem Frachtprovider ermöglicht, vom Boden aus festzustellen, wo sich ein bestimmtes Frachtstück gerade befindet), als Sicherheitsüberwachungs-Einrichtung oder als eine Multimedia-Einrichtung (zum Beispiel ein Passagierunterhaltssystem) eingerichtet sein.

Jeder der zweiten Kommunikations-Knoten kann eine Sende-/Empfangs-Antenne zum drahtlosen Kommunizieren mit der Sende-/Empfangs-Antenne der Schnittstellen-Vorrichtung aufweisen. Somit können die zweiten Kommunikations-Knoten dezentral mit einer separat zugeordneten Sende-/Empfangs-Antenne versehen sein, welche drahtlos durch den Austausch elektromagnetischer Strahlung mit der zentralen gemeinsamen Sende-/Empfangs-Antenne der Schnittstellen-Vorrichtung kommunizieren kann.

Im Weiteren werden Ausgestaltungen der erfindungsgemäßen Verwendung beschrieben. Diese Ausgestaltungen gelten auch für die Schnittstellen-Vorrichtung, für das Kommunikations-Netzwerk, für das Flugzeug und für das Verfahren zum Betreiben einer Schnittstelle für ein Kommunikations-Netzwerk.

Die Schnittstellen-Vorrichtung und/oder die Mehrzahl von ersten Kommunikations-Knoten kann/können in dem Rumpf des Flugzeugs angeordnet werden.

Zumindest ein Teil der Mehrzahl von zweiten Kommunikations-Knoten kann in einem Cockpit, in einem Passagierraum, in einem Frachtraum, in einer Küche oder in einem Sanitärbereich des Flugzeugs angeordnet werden.

Die Erfindung kann sowohl mittels eines Computerprogramms, das heißt einer Software, als auch mittels einer oder mehrerer spezieller elektrischer Schaltungen, das heißt in Hardware oder in beliebig hybrider Form, das heißt mittels Software-Komponenten und Hardware-Komponenten, realisiert werden.

Ausführungsbeispiele der Erfindung sind in den Figuren dargestellt und werden im Weiteren näher erläutert.

### Es zeigen:

Fig. 1 ein Kommunikations-Netzwerk gemäß einem ersten Ausführungsbeispiel der Erfindung.

Fig. 2 ein Kommunikations-Netzwerk gemäß einem zweiten Ausführungsbeispiel der Erfindung.

Gleiche oder ähnliche Komponenten in unterschiedlichen Figuren sind mit gleichen Bezugsziffern versehen.

Die Darstellungen in den Figuren sind schematisch und nicht maßstäblich.

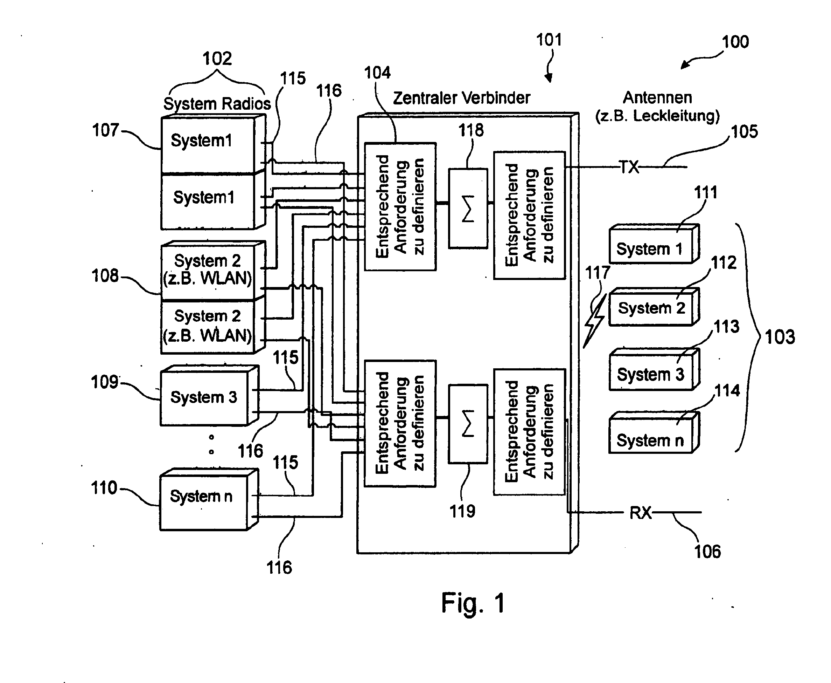

Im Weiteren wird bezugnehmend auf **Fig. 1** ein Kommunikations-Netzwerk 100 gemäß einem ersten Ausführungsbeispiel der Erfindung beschrieben, das in einem Flugzeug realisiert ist.

Das Kommunikations-Netzwerk 100 enthält eine Schnittstellen-Vorrichtung 101, eine Mehrzahl von ersten Kommunikations-Knoten 102 und eine Mehrzahl von zweiten Kommunikations-Knoten 103. Die Schnittstellen-Vorrichtung 101 enthält eine Vermittlungs-Einheit 104, eine Sende-Antenne 105 und eine Empfangs-Antenne 106.

Die ersten Kommunikations-Knoten 102 weisen ein erstes Steuersystem 107 (eine WLAN-Einrichtung), ein zweites Steuersystem 108 (ebenfalls eine WLAN-Einrichtung), ein drittes Steuersystem 109 (eine GSM-Einrichtung) und ein n-tes Steuersystem 110 (ein DVB-System, "Digital Video Broadcasting", das heißt ein Standard für Übertragung von digitalem Fernsehen) auf.

Dem ersten zentral vorgesehenen Steuersystem 107 ist ein erstes Empfangssystem 111 dezentral zugeordnet, das heißt an einer beliebigen Stelle in einem Flugzeug. Dem zentralen zweiten Steuersystem 108 ist ein verteiltes zweites Empfangssystem 112 an einer beliebigen Stelle in dem Flugzeug zugeordnet. Dem dritten Steuersystem 109 ist ein drittes Empfangssystem 113 an einer beliebigen Stelle in dem Flugzeug zugeordnet. Dem n-ten Steuersystem 110 ist ein n-tes Empfangssystem 114 an einer beliebigen Stelle in dem Flugzeug zugeordnet. Ein jeweiliges Steuersystem 107 bis 110 ist zum Steuern des zugeordneten Empfangssystems 111 bis 114 eingerichtet.

Die Vermittlungs-Einheit 104 ist mit jedem der ersten Kommunikations-Knoten 102 über Sendeleitungen 115 bzw. Empfangsleitungen 116 kommunizierfähig gekoppelt. Ferner ist die Vermittlungs-Einheit 104 zum Übermitteln einer Kommunikationsnachricht zwischen einem der ersten Kommunikations-Knoten 102 und einem diesem eindeutig zugeordneten zweiten Kommunikations-Knoten 103 eingerichtet. Ferner ist die Vermittlungs-Einheit 104 mit der Sende-Antenne 105 und mit der Empfangs-Antenne 106 zum drahtlosen Kommunizieren mit jedem der zweiten Kommunikations-Knoten 103 über die zum Kommunizieren mit jedem der zweiten Kommunikations-Knoten gemeinsam vorgesehene Sende-Antenne 105 bzw.
Empfangs-Antenne 106 gekoppelt. Eine solche drahtlose Kommunikation 117 erfolgt zwischen den Sende-/Empfangs-Antennen 105, 106 und den in jedem der Systeme 111 bis 114 vorgesehenen Sende-/Empfangs-Antennen (nicht gezeigt).

Die Vermittlungs-Einheit 104 ist für eine drahtgebundene Kommunikation mit jedem der ersten Kommunikations-Knoten 102 mit den Sendeleitungen 115, 116 versehen. Jede der Sendeleitungen 115 ist zum Übermitteln einer von einem der ersten Kommunikations-Knoten 102 zu sendenden Nachricht eingerichtet, und jeder der Empfangsanschlüsse 116 ist zum Übermitteln einer an einen der ersten Kommunikations-Knoten 102 zu sendenden Nachricht eingerichtet.

Die Vermittlungs-Einheit 104 weist eine erste Signalverarbeitungs-Einheit 118 auf, die mit der Mehrzahl von Sendeanschlüssen 115 gekoppelt ist und die zum Verarbeiten von mittels der Sende-Antenne 105 zu übermittelnden Signalen eingerichtet ist, welche der ersten Signalverarbeitungs-Einheit 118 mittels mindestens einem der Sendeanschlüsse 115 zuführbar ist. Ferner enthält die Vermittlungs-Einheit 104 eine zweite Signalverarbeitungs-Einheit 119, die mit der Mehrzahl von Empfangsanschlüssen 116 gekoppelt ist und die zum Verarbeiten von mittels der Empfangs-Antenne 106 übermittelten Signalen eingerichtet ist, welche mindestens einem Empfangsanschluss 116 mittels der zweiten Signalverarbeitungs-Einheit 119 zuführbar sind.

Die ersten bis n-ten Steuersysteme 107 bis 110 sind Elektronikeinschub-Vorrichtungen, die in ein Elektronik-Rack (nicht gezeigt) eingeschoben sind. Die ersten bis n-ten Empfangssysteme 111 bis 114 sind an verschiedenen Stellen eines Flugzeugs dezentral vorgesehen, zum Beispiel in einem Passagierraum, in einem Frachtraum, in einer Küche, in Sanitäranlagen oder in einem Cockpit. Somit können die einzelnen Dienste dezentral bereitgestellt werden und an einer zentralen Stelle, an denen die System Radios 102 und der zentrale Verbinder 101 angeordnet sind, gesteuert werden. Die Schnittstellen-Vorrichtung 101 und die ersten Kommunikations-Knoten 102 sind im Rumpf des Flugzeugs angeordnet, und die zweiten Kommunikations-Knoten 103 sind an verschiedenen dezentralen Stellen im Flugzeug (Cockpit, Passagierraum, Frachtraum, Küche, Sanitärbereich) angeordnet.

Wie in Fig. 1 gezeigt ist, bildet der zentrale Verbinder (Mischer) 101 eine Schnittstelle zwischen allen angeschlossenen Systemen 107 bis 110 bzw. 111 bis 114. Jedes System 107 bis 110 besitzt einen oder mehrere Sende- und Empfängereinheiten (dargestellt als System Radios), die jeweils getrennt mit dem zentralen Mischer 101 gekoppelt werden. Am Ausgang des zentralen Mischers 101 sind die beiden Antennen 105, 106 angeschlossen, und über diese wird die gesamte Kommunikation mit den zweiten Kommunikations-Knoten 103 hergestellt.

Für WLAN-Anwendungen ist eine ausschließlich zum Senden vorgesehene Sende-Antenne 105 und eine andere ausschließlich zum Empfang von Funksignalen eingerichtete Empfangs-Antenne 106 erforderlich. Auf diese Weise wird erst die gemeinsame Ansteuerung mit sogenannten WLAN-Funksignalen und die gleichzeitige Nutzung aller ohne Frequenzüberlappung unabhängig verfügbaren Kanäle ermöglicht, da auf der Empfangsseite eine Übersteuerung von Low Noise Amplifiern (LNA) der unkoordiniert sendenden WLAN Accesspoints vermieden wird. Zusätzliche Funksignale (zum Beispiel aufgrund von GSM-Telefonie) können auf die TX-Seite des universalen zentralen Verteilungssystems 100 aufgemischt werden und über diesen Zweig senden und empfangen. Im zentralen Mischer 101 werden die verschiedenen Signale (Frequenz, Pegel, Modulation) richtig aufsummiert bzw. im Empfängerzweig getrennt. Je nach angeschlossenem System können dazu weitere Bauteile (Filter, Isolatoren, Verstärker usw.) implementiert werden, welche die nötigen Anpassungen (Pegel, Impedanz) vornehmen.

Die Architektur des Kommunikations-Netzwerks 100 hat den Vorteil einer gemeinsamen Antenneninfrastruktur (zum Beispiel Leckleitung) zur Beschickung eines gesamten Bereichs mit zentralem Einspeisungspunkt, der gemäß dem beschriebenen Ausführungsbeispiel im Flugzeugrumpf vorgesehen ist. Ferner ist die Integration mehrerer System Radios in einem Gehäuse möglich, was zu einem Gewichtsersparnis und einem Platzersparnis führt.

Die Trennung des Sende- und Empfangszweigs schafft die Voraussetzung für die Benutzung aller Kanäle pro integriertem System (Standard), das heißt zum Beispiel bei WLAN die Benutzung aller drei unabhängigen Kanäle im ISN-Band an einer Antenne.

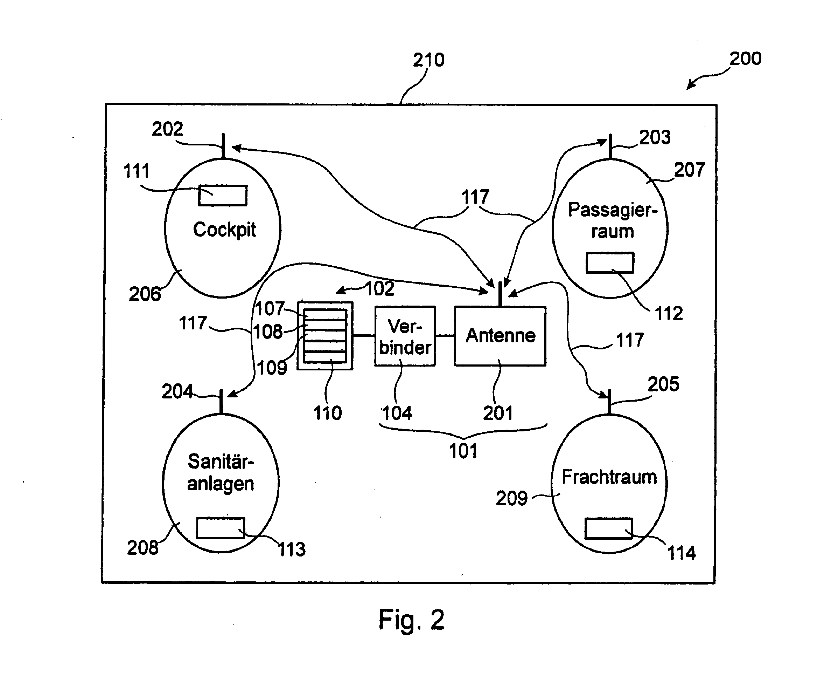

Im Weiteren wird bezugnehmend auf **Fig. 2** ein Kommunikations-Netzwerk 200 gemäß einem zweiten Ausführungsbeispiel der Erfindung beschrieben.

Fig. 2 unterscheidet sich von Fig. 1 im Wesentlichen dadurch, dass anstelle einer separaten Sende-Antenne 105 und einer separaten Empfangs-Antenne 106 gemäß Fig. 2 nur eine einzige zentrale Sende-/Empfangs-Antenne 201 in der Schnittstellen-Vorrichtung 101 vorgesehen ist, welche drahtlose Kommunikation 117 mit lokalen Sende-/Empfangs-Antennen 202 bis 205 an verschiedenen Stellen eines Flugzeugs 210 durchführt. Die einzelnen Empfangssysteme 111 bis 114 sind in einem Cockpit 206, in einem Passagierraum 207, in Sanitäranlagen 208 bzw. einem in Frachtraum 209 dezentral in dem Flugzeug 210 angeordnet, wobei die lokalen Sende-/Empfangs-Antennen 202 bis 205 mit der zentralen Sende-/Empfangs-Antenne 201 kommunizierfähig gekoppelt sind.

### Bezugszeichenliste:

- 100: Kommunikations-Netzwerk
- 101: Schnittstellen-Vorrichtung
- 102: erste Kommunikations-Knoten
- 103: zweite Kommunikations-Knoten
- 104: Vermittlungs-Einheit
- 105: Sende-Antenne
- 106: Empfangs-Antenne
- 107: erstes Steuersystem
- 108: zweites Steuersystem
- 109: drittes Steuersystem
- 110: n-tes Steuersystem
- 111: erstes Empfangssystem
- 112: zweites Empfangssystem
- 113: drittes Empfangssystem
- 114: n-tes Empfangssystem
- 115: Sendeleitung
- 116: Empfangsleitung
- 117: drahtlose Kommunikation
- 118: erste Signalverarbeitungs-Einheit
- 119: zweite Signalverarbeitungs-Einheit
- 200: Kommunikations-Netzwerk
- 201: zentrale Sende-/Empfangs-Antenne
- 202: lokale Sende-/Empfangs-Antenne
- 203: lokale Sende-/Empfangs-Antenne
- 204: lokale Sende-/Empfangs-Antenne
- 205: lokale Sende-/Empfangs-Antenne
- 206: Cockpit
- 207: Passagierraum
- 208: Sanitäranlagen
- 209: Frachtraum
- 210: Flugzeug

## Patentansprüche

1. Schnittstellen-Vorrichtung (101) für ein Kommunikations-Netzwerk (100) aus einer Mehrzahl von ersten Kommunikations-Knoten (102) und aus einer Mehrzahl von zweiten Kommunikations-Knoten (103), wobei die Schnittstellen-Vorrichtung (101) aufweist:
eine Vermittlungs-Einheit (104);
eine Sende-/Empfangs-Antenne (105, 106);
wobei die Vermittlungs-Einheit (104) mit jedem der ersten Kommunikations-Knoten (102) und mit jedem der zweiten Kommunikations-Knoten (103) kommunizierfähig koppelbar ist und zum Übermitteln einer Kommunikationsnachricht zwischen einem der ersten Kommunikations-Knoten (102) und einem diesem eindeutig zugeordneten zweiten Kommunikations-Knoten (103) eingerichtet ist;
wobei die Vermittlungs-Einheit (104) mit der Sende-/Empfangs-Antenne (105, 106) zum drahtlosen Kommunizieren mit jedem der zweiten Kommunikations-Knoten (103) über die zum Kommunizieren mit jedem der zweiten Kommunikations-Knoten (103) gemeinsam vorgesehene Sende-/Empfangs-Antenne (105, 106) gekoppelt ist.

2. Schnittstellen-Vorrichtung (101) nach Anspruch 1,
wobei die Vermittlungs-Einheit (104) für eine drahtgebundene Kommunikation mit jedem der ersten Kommunikations-Knoten (102) eingerichtet ist.

3. Schnittstellen-Vorrichtung (101) nach Anspruch 1 oder 2,
wobei die Vermittlungs-Einheit (104) eine Mehrzahl von Sendeanschlüssen (115) aufweist und eine Mehrzahl von Empfangsanschlüssen (116) aufweist;
wobei jeweils einer der Sendeanschlüsse (115) und jeweils einer der Empfangsanschlüsse (116) mit einem der ersten Kommunikations-Knoten (102) koppelbar ist; und
wobei jeder der Sendeanschlüsse (115) zum Übermitteln einer von einem der ersten Kommunikations-Knoten (102) zu sendenden Kommunikationsnachricht eingerichtet ist, und
wobei jeder der Empfangsanschlüsse (116) zum Übermitteln einer an einen der ersten Kommunikations-Knoten (102) zu sendenden Kommunikationsnachricht eingerichtet ist.

4. Schnittstellen-Vorrichtung (101) nach Anspruch 3,
wobei die Vermittlungs-Einheit (104) eine erste Signalverarbeitungs-Einheit (118) aufweist, die mit der Mehrzahl von Sendeanschlüssen (115) gekoppelt ist und die zum Verarbeiten von mittels der Sende-/Empfangs-Antenne (105, 106) zu sendenden Signalen eingerichtet ist, welche der ersten Signalverarbeitungs-Einheit (118) mittels mindestens einem der Sendeanschlüsse (115) zuführbar sind.

5. Schnittstellen-Vorrichtung (101) nach Anspruch 3 oder 4,
wobei die Vermittlungs-Einheit (104) eine zweite Signalverarbeitungs-Einheit (119) aufweist, die mit der Mehrzahl von Empfangsanschlüssen (116) gekoppelt ist und die zum Verarbeiten von mittels der Sende-/Empfangs-Antenne (105, 106) empfangenen Signalen eingerichtet ist, welche mindestens einem Empfangsanschluss (116) mittels der zweiten Signalverarbeitungs-Einheit (119) zuführbar sind.

6. Schnittstellen-Vorrichtung (101) nach einem der Ansprüche 1 bis 5,
wobei die Sende-/Empfangs-Antenne (105, 106) in eine Sende-Antenne (105) zum drahtlosen Senden von Signalen an die zweiten Kommunikations-Knoten (103) und in eine von der Sende-Antenne (105) separat vorgesehene Empfangs-Antenne (106) zum drahtlosen Empfangen von Signalen von den zweiten Kommunikations-Knoten (103) aufgeteilt ist.

7. Schnittstellen-Vorrichtung (101) nach einem der Ansprüche 1 bis 6,
die eine Mehrzahl von Sende-/Empfangs-Antennen (105, 106) aufweist, von denen jede zum Kommunizieren mit jedem der zweiten Kommunikations-Knoten (103) gemeinsam vorgesehen ist.

8. Kommunikations-Netzwerk (100),
mit einer Schnittstellen-Vorrichtung (101) nach einem der Ansprüche 1 bis 7;
mit einer Mehrzahl von ersten Kommunikations-Knoten (102);
mit einer Mehrzahl von zweiten Kommunikations-Knoten (103);
wobei jedem der ersten Kommunikations-Knoten (102) einer der zweiten Kommunikations-Knoten (103) eindeutig zugeordnet ist;
wobei die Vermittlungs-Einheit (104) mit jedem der ersten Kommunikations-Knoten (102) und mit jedem der zweiten Kommunikations-Knoten (103) kommunizierfähig gekoppelt ist und zum Übermitteln einer Kommunikationsnachricht zwischen einem der ersten Kommunikations-Knoten (102) und dem diesem eindeutig zugeordneten zweiten Kommunikations-Knoten (103) über die zum Kommunizieren mit jedem der zweiten Kommunikations-Knoten (103) gemeinsam vorgesehene Sende-/Empfangs-Antenne (105, 106) eingerichtet ist.

9. Kommunikations-Netzwerk (100) nach Anspruch 8,
mit einer Aufnahme-Vorrichtung, in welcher die Mehrzahl von ersten Kommunikations-Knoten (102) aufnehmbar sind.

10. Kommunikations-Netzwerk (100) nach Anspruch 9,
bei dem die Aufnahme-Vorrichtung ein Elektronik-Rack ist.

11. Kommunikations-Netzwerk (100) nach einem der Ansprüche 8 bis 10,
bei dem zumindest einer der Mehrzahl von ersten Kommunikations-Knoten (102) eine Steuer-Einheit zum Steuern des zugeordneten zweiten Kommunikations-Knotens (103) aufweist.

12. Kommunikations-Netzwerk (100) nach einem der Ansprüche 8 bis 11,
bei dem zumindest einer der ersten Kommunikations-Knoten (102) als
WLAN-Einrichtung;
Mobilfunk-Einrichtung;
Passagierunterhaltungs-Einrichtung;
Überwachungs-Einrichtung; oder
Frachtüberwachungs-Einrichtung;
eingerichtet ist.

13. Kommunikations-Netzwerk (100) nach einem der Ansprüche 8 bis 12, bei dem jeder der zweiten Kommunikations-Knoten (103) eine Sende-/Empfangs-Antenne (202 - 205) zum drahtlosen Kommunizieren mit der Sende-/Empfangs-Antenne (201) der Schnittstellen-Vorrichtung (104) aufweist.

14. Flugzeug (210), mit einer Schnittstellen-Vorrichtung (104) nach einem der Ansprüche 1 bis 7 oder mit einem Kommunikations-Netzwerk (100) nach einem der Ansprüche 8 bis 13.

15. Verfahren zum Betreiben einer Schnittstelle für ein Kommunikations-Netzwerk (100) aus einer Mehrzahl von ersten Kommunikations-Knoten (102) und aus einer Mehrzahl von zweiten Kommunikations-Knoten (103),
wobei bei dem Verfahren
eine Vermittlungs-Einheit (104) der Schnittstelle mit jedem der ersten Kommunikations-Knoten (102) und mit jedem der zweiten Kommunikations-Knoten (102) kommunizierfähig gekoppelt wird und zum Übermitteln einer Kommunikationsnachricht zwischen einem der ersten Kommunikations-Knoten (102) und einem diesem eindeutig zugeordneten zweiten Kommunikations-Knoten (103) eingerichtet wird;
die Vermittlungs-Einheit (104) mit einer Sende-/Empfangs-Antenne (105, 106) zum drahtlosen Kommunizieren mit jedem der zweiten Kommunikations-Knoten (103) über die zum Kommunizieren mit jedem der zweiten Kommunikations-Knoten (103) gemeinsam vorgesehene Sende-/Empfangs-Antenne (105, 106) gekoppelt wird.

16. Verwendung einer Schnittstellen-Vorrichtung (101) nach einem der Ansprüche 1 bis 7 oder eines Kommunikations-Netzwerks (100) nach einem der Ansprüche 8 bis 13 in einem Flugzeug (210).

17. Verwendung nach Anspruch 16,
bei dem die Schnittstellen-Vorrichtung (101) und/oder die Mehrzahl von ersten Kommunikations-Knoten (102) in dem Rumpf des Flugzeugs (210) angeordnet wird.

18. Verwendung nach Anspruch 16 oder 17,
bei dem zumindest ein Teil der Mehrzahl von zweiten Kommunikations-Knoten (103) in einem Cockpit, in einem Passagierraum, in einem Frachtraum, in einer Küche oder in einem Sanitärbereich des Flugzeugs (210) angeordnet wird.

## Claims

1. An interface device (101) for a communication network (100) comprising a multitude of first communication nodes (102) and a multitude of second communication nodes (103),
wherein the interface device (101) comprises:
a switching unit (104);
a transmit-/receive aerial (105, 106);
wherein the switching unit (104) can be coupled, so as to be able to communicate, to each of the first communication nodes (102) and to each of the second communication nodes (103), and is set up for transmitting a communication message between one of the first communication nodes (102) and a second communication node (103), which is unambiguously allocated to said first communication node (102);
wherein the switching unit (104) is coupled to the transmit-/receive aerial (105, 106) for wireless communication with each of the second communication nodes (103) by way of the transmit-/receive aerial (105, 106) that is shared for communicating with each of the second communication nodes (103).

2. The interface device according to claim 1,
wherein the switching unit (104) is equipped for wire-bound communication with each of the first communication nodes (102).

3. The interface device (101) according to claim 1 or 2,
wherein the switching unit (104) comprises a multitude of transmit connections (115) and a multitude of receive connections (116);
wherein in each case one of the transmit connections (115) and one of the receive connections (116) can be coupled to one of the first communication nodes (102); and
wherein each of the transmit connectors (115) is equipped for transmitting a communication message to be sent by one of the first communication nodes (102), and
wherein each of the receive connections (116) is equipped for transmitting a communication message to be sent to one of the first communication nodes (102).

4. The interface device (101) according to claim 3,
wherein the switching unit (104) comprises a first signal processing unit (118), which is coupled to the multitude of transmit connections (115) and which is equipped for processing signals to be sent by means of the transmit-/receive aerial (105, 106), which signals can be conveyed to the first signal processing unit (118) by means of at least one of the transmit connections (115).

5. The interface device (101) according to claim 3 or 4,
wherein the switching unit (104) comprises a second signal processing unit (119), which is coupled to the multitude of receive connections (116) and which is equipped for processing signals received by means of the transmit-/receive aerial (105, 106), which signals can be conveyed to at least one receive connection (116) by means of the second signal processing unit (119).

6. The interface device (101) according to one of the claims 1 to 5,
wherein the transmit-/receive aerial (105, 106) is divided into a transmit aerial (105) for wireless transmission of signals to the second communication nodes (103), and into a receive aerial (106), provided separately from the transmit aerial (105), for the wireless receiving of signals from the second communication nodes (103).

7. The interface device (101) according to one of the claims 1 to 6, which interface device (101) comprises a multitude of transmit-/receive aerials (105, 106), each of which is provided for communication with each of the second communication nodes (103) in a shared arrangement.

8. A communication network (100),
comprising an interface device (101) according to one of the claims 1 to 7;
comprising a multitude of first communication nodes (102);
comprising a multitude of second communication nodes (103);
wherein one of the second communication nodes (103) is unambiguously allocated to each of the first communication nodes (102);
wherein the switching unit (104) is coupled, so as to be able to communicate, to each of the first communication nodes (102) and to each of the second communication nodes (103), and is set up for transmitting a communication message between one of the first communication nodes and a second communication node (103), which is unambiguously allocated to said first communication node (102) by way of the transmit-/receive aerial (105, 106) that is shared for communicating with each of the second communication nodes (103).

9. The communication network (100) according to claim 8, comprising an accommodation device in which the multitude of first communication nodes (102) can be accommodated.

10. The communication network (100) according to claim 9, in which the accommodation device is an electronics rack.

11. The communication network (100) according to one of the claims 8 to 10, in which at least one of the multitude of first communication nodes (102) can comprise a control device for controlling the allocated second communication node (103).

12. The communication network (100) according to one of the claims 8 to 11, in which at least one of the first communication nodes (102) can be equipped as
a WLAN device;
a mobile radio device;
an in-flight cabin entertainment device;
a monitoring device; or
a freight monitoring device.

13. The communication network (100) according to one of the claims 8 to 12, in which each of the second communication nodes (103) can comprise a transmit-/receive aerial (202-205) for wireless communication with the transmit-/receive aerial (201) of the interface device (104).

14. An aircraft (210), comprising an interface device (104) according to one of the claims 1 to 7 or a communication network (100) according to one of the claims 8 to 13.

15. A method for operating an interface for a communication network (100) comprising a multitude of first communication nodes (102) and a multitude of second communication nodes (103),
wherein in the method
a switching unit (104) of the interface is coupled, so as to be able to communicate, to each of the first communication nodes (102) and to each of the second communication nodes (103), and is set up for transmitting a communication message between one of the first communication nodes (102) and a second communication node (103), which is unambiguously allocated to said first communication node (102);
the switching unit (104) is coupled to a transmit-/receive aerial (105, 106) for wireless communication with each of the second communication nodes (103) by way of the transmit-/receive aerial (105, 106) that is shared for communicating with each of the second communication nodes (103).

16. The use of an interface device (101) according to one of the claims 1 to 7 or of a communication network (100) according to one of the claims 8 to 13 in an aircraft (210).

17. The use according to claim 16, wherein the interface device (101) and/or the multitude of first communication nodes (102) is arranged in the fuselage of the aircraft (210).

18. The use according to claim 16 or 17, in which at least part of the multitude of second communication nodes (103) are arranged in the cockpit, in a passenger compartment, a cargo hold, a galley or a sanitation region of the aircraft (210).

## Revendications

1. Dispositif d'interface (101) pour un réseau de communication (100) constitué d'une pluralité de premiers noeuds de communication (102) et d'une pluralité de seconds noeuds de communication (103), le dispositif d'interface (101) comportant :
une unité de commutation (104),
une antenne d'émission/réception (105, 106),
dans lequel l'unité de commutation (104) peut être couplée à chacun des premiers noeuds de communication (102) et à chacun des seconds noeuds de communication (103) de manière à pouvoir communiquer, et est configurée pour transmettre un message de communication entre l'un des premiers noeuds de communication (102) et l'un des seconds noeuds de communication (103) attribué à celui-ci de manière univoque,
dans lequel l'unité de commutation (104) est couplée à l'antenne d'émission/réception (105, 106) pour communiquer sans fil avec chacun des seconds noeuds de communication (103) par l'intermédiaire de l'antenne d'émission/réception (105, 106) destinée à communiquer collectivement avec chacun des seconds noeuds de communication (103).

2. Dispositif d'interface (101) selon la revendication 1,
dans lequel l'unité de commutation (104) est configurée pour une communication filaire avec chacun des premiers noeuds de communication (102).

3. Dispositif d'interface (101) selon la revendication 1 ou 2,
dans lequel l'unité de commutation (104) comporte une pluralité de ports d'émission (115) et comporte une pluralité de ports de réception (116),
dans lequel respectivement l'un des ports d'émission (115) et respectivement l'un des ports de réception (116) peut être couplé à l'un des premiers noeuds de communication (102),
dans lequel chacun des ports d'émission (115) est configuré pour transmettre un message de communication devant être envoyé à partir de l'un des premiers noeuds de communication (102), et dans lequel chacun des ports de réception (116) est configuré pour transmettre un message de communication devant être envoyé à l'un des premiers noeuds de communication (102).

4. Dispositif d'interface (101) selon la revendication 3,
dans lequel l'unité de commutation (104) comporte une première unité de traitement de signal (118) couplée à la pluralité de ports d'émission (115) et configurée pour traiter des signaux devant être envoyés au moyen de l'antenne d'émission/réception (105, 106), lesdits signaux pouvant être transférés vers ladite première unité de traitement de signal (118) au moyen d'au moins un desdits ports d'émission (115).

5. Dispositif d'interface (101) selon la revendication 3 ou 4,
dans lequel l'unité de commutation (104) comporte une seconde unité de traitement de signal (119) couplée à la pluralité de ports de réception (116) et configurée pour traiter des signaux reçus au moyen de l'antenne d'émission/réception (105, 106), lesdits signaux pouvant être transférés vers au moins un port de réception (116) au moyen de ladite seconde unité de traitement de signal (119).

6. Dispositif d'interface (101) selon l'une des revendications 1 à 5,
dans lequel l'antenne d'émission/réception (105, 106) est divisée en une antenne d'émission (105) pour l'émission sans fil de signaux au niveau des seconds noeuds de communication (103) et en une antenne de réception (106) prévue séparément de l'antenne d'émission (105) pour la réception sans fil de signaux provenant des seconds noeuds de communication (103).

7. Dispositif d'interface (101) selon l'une des revendications 1 à 6,
comportant une pluralité d'antennes d'émission/réception (105, 106), chacune d'entre elles étant destinée à communiquer collectivement avec chacun des seconds noeuds de communication (103).

8. Réseau de communication (100), comportant
un dispositif d'interface (101) selon l'une des revendications 1 à 7,
une pluralité de premiers noeuds de communication (102),
une pluralité de seconds noeuds de communication (103),
dans lequel chacun des premiers noeuds de communication (102) est attribué de manière univoque à l'un des seconds noeuds de communication (103),
dans lequel l'unité de commutation (104) peut être couplée à chacun des premiers noeuds de communication (102) et à chacun des seconds noeuds de communication (103) de manière à pouvoir communiquer, et est configurée pour transmettre un message de communication entre l'un des premiers noeuds de communication (102) et le second noeud de communication (103) attribué à celui-ci de manière univoque par l'intermédiaire de l'antenne d'émission/réception (105, 106) destinée à communiquer collectivement avec chacun des seconds noeuds de communication (103).

9. Réseau de communication (100) selon la revendication 8,
comportant un dispositif récepteur dans lequel la pluralité de premiers noeuds de communication (102) peut être agencée.

10. Réseau de communication (100) selon la revendication 9,
dans lequel le dispositif récepteur est un bâti électronique.

11. Réseau de communication (100) selon l'une des revendications 8 à 10,
dans lequel au moins un noeud parmi la pluralité de premiers noeuds de communication (102) comporte une unité de commande pour la commande du second noeud de communication attribué (103).

12. Réseau de communication (100) selon l'une des revendications 8 à 11,
dans lequel au moins un des premiers noeuds de communication (102) est configuré comme
un équipement WLAN,
un équipement radio mobile,
un équipement de divertissement de passagers,
un équipement de surveillance, ou
un équipement de surveillance de fret.

13. Réseau de communication (100) selon l'une des revendications 8 à 12,
dans lequel chacun des seconds noeuds de communication (103) comporte une antenne d'émission/réception (202 à 205) pour communiquer sans fil avec l'antenne d'émission/réception (201) du dispositif d'interface (104).

14. Avion (210),
comportant un dispositif d'interface (104) selon l'une des revendications 1 à 7, ou un réseau de communication (100) selon l'une des revendications 8 à 13.

15. Procédé pour exploiter une interface pour un réseau de communication (100) constitué d'une pluralité de premiers noeuds de communication (102) et d'une pluralité de seconds noeuds de communication (103), le procédé comportant les étapes consistant à :
coupler une unité de commutation (104) de l'interface à chacun des premiers noeuds de communication (102) et à chacun des seconds noeuds de communication (102) de manière à pouvoir communiquer, et la configurer pour transmettre un message de communication entre l'un des premiers noeuds de communication (102) et l'un des seconds noeuds de communication (103) attribué à celui-ci de manière univoque,
coupler l'unité de commutation (104) à une antenne d'émission/réception (105, 106) pour communiquer sans fil avec chacun des seconds noeuds de communication (103) par l'intermédiaire de l'antenne d'émission/réception (105, 106) prévue pour communiquer collectivement avec chacun des seconds noeuds de communication (103).

16. Utilisation d'un dispositif d'interface (101) selon l'une des revendications 1 à 7 ou d'un réseau de communication (100) selon l'une des revendications 8 à 13 dans un avion (210).

17. Utilisation selon la revendication 16,
dans laquelle le dispositif d'interface (101) et/ou la pluralité de premiers noeuds de communication (102) est agencé dans le fuselage de l'avion (210).

18. Utilisation selon la revendication 16 ou 17,
dans laquelle au moins une partie de la pluralité de seconds noeuds de communication (103) est agencée dans un poste de pilotage, dans une cabine de passagers, dans une soute à fret, dans une cuisine ou dans un espace sanitaire de l'avion (210).
